# EUROPEAN PATENT APPLICATION

(11) **EP 4 430 943 A1**
(43) Date of publication of application: **18.09.2024**
(21) Application number: 24163695.0
(22) Date of filing: 14.03.2024
(51) Int. Cl.: A01G 22/00, C02F 11/00, A01G 24/20

(54) **CULTIVATION SYSTEM FOR ENERGY CROPS HAVING RHIZOME, GROWING MEDIUM FOR THIS PURPOSE, AND METHOD FOR GROWING ENERGY CROPS HAVING RHIZOME**

(30) Priority: 16.03.2023 HU 2300085
(71) Applicant: Envirotis Holding Zártkörüen Müködö Részvénytársaság, 1124 Budapest (HU)
(72) Inventor: Béla, Farkas, 2840 Oroszlány (HU)
(74) Representative: Kovári, Zoltán

(57) **Abstract**

The invention relates to a rhizomatous energy crop cultivation system comprising a cultivation bed, a growing medium and rhizomatous energy crop plant individuals therein, and the system being characterised in that the growing medium comprises digested sewage sludge and a diluent, and the cultivation bed has a watertight bottom. The invention further relates to a growing medium for cultivating a rhizomatous energy crop, to the rhizomatous energy crop grown and harvested in this way, to a method for cultivating a rhizomatous energy crop, and to the use of sewage sludge in the cultivation of rhizomatous energy crops.

## Description

### Field of the invention

The present invention relates to a rhizomatous energy crop cultivation system, the growing medium of which comprises digested sewage sludge and a diluent. The energy crop is a rhizomatous energy crop within the meaning of the present invention, such as the giant reed (*Arundo donax*). The present invention also relates to a growing medium suitable for cultivating a rhizomatous energy crop, to the rhizomatous energy crop cultivated by the cultivation system and harvested, to the process for the cultivation of the rhizomatous energy crop and to the use of digested sewage sludge in such a system.

### Background of the invention

There are many crops that are not intended for human or animal consumption, collectively known as energy crops. An advantage of cultivation energy crops is that regarding the nutrient supply the potentially harmful components for humans or animals does not have to be taken into account. Parts of energy crops can be used in their material form, e.g. as raw materials for construction, energy fuels, fermentation nutrients, etc. Whether a plant is an energy crop or not is mainly determined by the intended use. Therefore, a given plant species may be conceivable to be used as animal feed or as fuel, but in the context of the present invention only the latter case can be considered as an energy crop.

In the state of the art, many types of energy crops are known. The present invention is illustrated primarily by the example of the giant reed as a rhizomatous energy crop. However, as it will be obvious to a person skilled in the art, the present invention can be readily adapted to other rhizomatous energy crops.

The giant reed (*Arundo donax*) is a well-known rhizomatous energy crop of the family *Poaceae,* growing to a height of several metres, suitable for arable cultivation. It is hydrophytic, but its deep root system allows it to tolerate intermittent drought at the soil surface. In Hungary, it can freeze in the colder winters, and it is mostly the younger than two years old that are at risk. To overcome this an attempt was made to breed a frost-tolerant line in 2013. Giant reed prefers loose soil but can also grow in compacted soil. It can tolerate high salinity and a pH between 5.0 and 8.7. It is a fast grower with a high biomass yield and thus can be used as an energy crop. The above ground yield in Europe is 19-22 at/ha, with yields initially increasing per cultivation cycle. In Hungary, without irrigation, yields of 10-20 at/ha can be achieved, for example, in a 2012 planting, yields of 8 at/ha in the first year, 20 at/ha from the second year onwards, and 10-15 at/ha in marginal areas were achieved. Without replenishment of nutrients, the life cycle without replanting is 10-15 years, which can be increased with replenishment of nutrients, but yields may already be reduced after 15 years. Recent studies suggest that even 20 years can be achieved without nutrient replenishment. Regular nutrient replenishment during the cultivation of giant reed is not necessary, but moderate nitrogen supplementation will increase yields. NPK (nitrogen-phosphorus-potassium) replenishment is advisable in the first year, after which it may not be necessary due to the presence of nitrogen-fixing bacteria, but with the NPK replenishment the giant reed plantation can be intensified. For a single harvest per year, it is advisable to replenish the minerals (potassium, microelements, phosphorus) every four years, but incorporation into the soil is no longer physically possible due to the dense root system. The following literature sources provide an overview of the cultivation and utilization of the giant reed: Simon-Kovács-Márton: "Olasznád nehézfém fitoextrakciójának vizsgálata" (in English: Examination of heavy metal phytoextraction of the giant reed (Talajvédelem különszám, 2008, p. 311); Dr. László Simon: "Az olasznád termesztése és hasznosítása" (in English: Cultivation and utilization of the giant reed") (Növénytermelés, June 2017, vol. 66., no. 2, pp. 89-110); James A. Duke. 1983. Handbook of Energy Crops (unpublished, parts available online: https://hort.purdue.edu/newcrop/duke_energy/Arundo_donax.html) ; Gabrella Antal: "Az olasznád biotechnológiai módszerrel történ 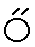 szaporításának és termesztésének néhány bioökönómiai kérdése*"* (in English: Some bioeconomical issues of the biotechnological propagation and cultivation of the giant reed), PhD thesis, University of Debrecen, 2018, https://dea.lib.unideb.hu/items/f0281d8d-9677-46fe-abdd-a59e3fbeca20/full); The Potential Application of Giant Reed (Arundo donax) in Ecological Remediation (Frontiers in Environmental Science., 13 May 2021, Sec. Toxicology, Pollution and the Environment, Volume 9, https://doi.org/10.3389/fenvs.2021.652367); Alshaal, T., Domokos-Szabolcsy, É., Márton, L., Czak6, M., Kátai, J., Balogh, P., et al. (2013) Restoring Soil Ecosystems and Biomass Production of Arundo donax L. under Microbial Communities-Depleted Soil. BioEnergy Research, doi: 10.1007/s12155-12013-19369-12155.

The disposal of both sewage sludge and compost is a growing challenge. Therefore, their use as plant nutrients has become a priority.

Patent application CN113277627A describes the treatment (conditioning) of sewage sludge, wherein to the sewage sludge to be treated polyaluminum chloride as flocculant, microorganisms culture, a conditioning agent and filler is mixed. The sludge obtained after treatment can be used as one of the raw materials for cultivation of crops.

However, the resulting sludge has limited use for crop production due to its high aluminium content.

Patent application WO21064143A1 describes the extraction of heavy metals from sewage sludge by plants.

Utility model CN215855699U describes a device which can be used to turn sewage sludge into soil through an additional fermentation process.

Patent application CN112919731A describes the treatment of wastewater without rotting, in which the wastewater to be treated is lead through a channel planted with aquatic plants.

Patent application EP3560908A1 discloses a process for the preparation of an organic soil-nutrient supplement from fermented sludge of animal origin, dry plant material, humus and minerals. The procedure is designed to improve soil.

According to patent application CN105613018A, blocks consisting of sewage sludge and plant residues are formed, which contain a semipermeable membrane for water and water-retaining material. These blocks can be used to grow crops in deserts.

Patent application MX2017013499A1 describes a process for treating wastewater. It involves the creation of an artificial swamp through which municipal wastewater is lead through, without the use of a digestion step.

Patent application IE20140176A1 describes the placement of sewage sludge in biodegradable fibrous packaging. The fibrous packaging allows water to escape and subsequently be further dried by aeration. A water removal efficiency can be increased by planting high water demanding energy crops in the sewage sludge packed as described above.

Patent application IN01286MU2014A concerns the removal of heavy metal pollution from industrial wastewater using plants, where the giant reed can be used as the plant. According to the application, the resulting giant reed containing heavy metals can be used to make baskets, thus the introduction of heavy metal pollution into the food chain is delayed in time.

Sewage sludge is often disposed of by placing the sludge below the soil surface. The disposal of sewage sludge in the soil is usually subject to significant legal constraints and several technical problems. One of the most important of these is that sludge degradation is slowed down by leaching and, in some cases, by lack of moisture or homogeneity. The degradation time of sludge disposed in this way is therefore difficult to estimate. Sewage sludge placed too deep will not decompose at a sufficient rate in an oxygen-depleted environment, denitrification will occur at a higher rate, and ammonia and methane will be formed, which is harmful to the environment. On the other hand, if the sewage sludge is placed too shallow it will decompose quickly, limiting its nutrient use for the plants that live there.

Cultivation giant reeds according to the state of the art is tied to arable land and soil, which limits the potential of giant reed as an energy crop. Therefore, we aimed at developing an energy crop cultivation system that will allow the cultivation of giant reed in degraded areas, away from arable land and without soil can be cultivated, even more efficiently than in the field.

We recognized that the giant reed in a growing medium having digested sewage sludge on its surface, under artificial conditions, i.e. in a cultivation bed can be cultivated with good efficiency, thereby said system uses the digested sewage sludge. Almost 90% of the digested sewage sludge can be used in this way to cultivate energy crops.

### Brief description of the figures

Figure 1 shows a schematic representation of a preferred embodiment of a cultivation bed of the rhizomatous energy crop cultivation system according to the invention, in a state without growing medium and energy crop.
Figure 2 shows a cross-sectional view of the cultivation bed according to Figure 1 along the A-A auxiliary line.
Figure 3 shows a cross-sectional view of the cultivation bed according to Figure 1 along the B-B auxiliary line, in a state filled with growing medium and planted with rhizomatous energy crops.

### Short description of the invention

The present invention thus relates to a rhizomatous energy crop cultivation system comprising a cultivation bed, a growing medium and rhizomatous energy crop individuals therein, and which system is characterised by that the growing medium contains digested sewage sludge and diluent, and the cultivation bed has a watertight bottom.

According to another preferred embodiment of the present invention, the growing medium has a layering arrangement from the bottom upwards as follows: initial growing medium, first nutrient substitute layer and first barrier layer, wherein the first nutrient substitute layer is digested sewage sludge and the first barrier layer is plant residue.

According to a further preferred embodiment of the present invention, the growing medium comprises a plurality of nutrient substitute layers and a plurality of barrier layers in an alternating arrangement over the initial growing medium, wherein each nutrient substitute layer is digested sewage sludge and each barrier layer is plant residue.

According to another preferred embodiment of the present invention, the diluent is compost.

According to a further preferred embodiment of the present invention, the ratio of digested sewage sludge to diluent in the initial growing medium ranges from 20% sewage sludge : 80% diluent to 80% sewage sludge : 20% diluent, preferably 50% sewage sludge : 50% diluent.

According to another preferred embodiment of the present invention, the plant residue forming the one or more barrier layers is mulch, preferably mulch prepared from said rhizomatous energy crop.

According to a further preferred embodiment of the present invention, the cultivation bed is provided with a pedestal suitable for draining leachate and a collection well suitable for collecting the leachate and the cultivation bed contains an irrigation system by the use of which the leachate collected in the collection well can be used to irrigate the cultivation bed.

According to another preferred embodiment of the present invention, the pedestal suitable for draining leachate comprises a perforated drainage pipe leading to the collection well, wherein the pedestal has a slope along the perforated drainage pipe in the direction to the collection well relative to horizontal, preferably a slope of up to 1.0%.

According to a further preferred embodiment of the present invention, the cultivation bed is configured as a partially recessed or recessed cultivation bed, and/or comprises a peripheral barrier, and/or a wildlife protection device is installed around it.

According to a further preferred embodiment of the present invention, the rhizomatous energy crop is of the family *Poaceae,* preferably of the genus *Arundo,* more preferably the *Arundo donax,* i.e. the giant reed.

The present invention also relates to a growing medium for cultivation a rhizomatous energy crop, wherein the growing medium comprises digested sewage sludge, and wherein the growing medium is characterised in that it comprises a plurality of layers from the bottom upwards as follows: an initial growing medium, a first nutrient substitute layer and a first barrier layer, wherein the initial growing medium comprises digested sewage sludge and diluent, the first nutrient substitute layer is digested sewage sludge and the first barrier layer is plant residue.

According to a preferred embodiment of the present invention, the growing medium comprises over the initial growing medium in an alternating arrangement a plurality of nutrient substitute layers and a plurality of barrier layers, where each nutrient substitute layer is digested sewage sludge and each barrier layer is plant residue, and optionally the diluent is compost.

According to another preferred embodiment of the present invention, the plant residue forming the one or more barrier layers in the growing medium is mulch, preferably a mulch prepared from said rhizomatous energy crop.

According to a further preferred embodiment of the present invention, in the growing medium the ratio of digested sewage sludge to diluent in the initial growing medium ranges from 20% sewage sludge : 80% diluent to 80% sewage sludge : 20% diluent, preferably 50% sewage sludge : 50% diluent.

According to another preferred embodiment of the present invention, the rhizomatous energy crop cultivable in the growing medium is of the family *Poaceae,* preferably of the genus *Arundo,* more preferably *Arundo donax,* i.e. the giant reed.

The present invention further relates to the harvested rhizomatous energy crop, characterized in that it was grown in the rhizomatous energy crop cultivation system as described above or it was grown in a growing medium as described above.

According to a preferred embodiment of the present invention, the harvested rhizomatous energy crop is of the family *Poaceae,* preferably of the genus *Arundo,* more preferably *Arundo donax,* i.e. the giant reed.

The present invention also relates to a method for the cultivation of a rhizomatous energy crop which is carried out in a cultivation bed with a watertight bottom and containing growing medium, and which method comprises the following steps:
a) initial growing medium is placed in the cultivation bed, which initial growing medium contains digested sewage sludge and diluent;
b) said rhizomatous energy crop is planted in the initial growing medium obtained in step a);
c) the rhizomatous energy crop is grown;
d) the rhizomatous energy crop grown in step c) is harvested.

According to a preferred embodiment of the present invention, the method further comprises the following steps:
e) a first nutrient substitute layer is placed onto the stubble remaining after step (d), which nutrient substitute layer contains digested sewage sludge;
f) on the first nutrient substitute layer a first barrier layer is placed, which barrier layer is preferably mulch, more preferably a mulch made from said rhizomatous energy crop;
g) grow the rhizomatous energy crop within the next cultivation cycle;
h) the rhizomatous energy crop grown in step (g) is harvested.

According to a further preferred embodiment of the present invention, the method comprises further cycles of cultivation, wherein after step h) steps according to steps e) to h) are carried out such that in an alternating arrangement additional nutrient substitute layers and additional barrier layers are placed on top of the corresponding layer.

According to another preferred embodiment of the present invention the rhizomatous energy crop is of the family *Poaceae,* preferably of the genus *Arundo,* more preferably *Arundo donax,* i.e. the giant reed.

According to a further preferred embodiment of the present invention during step c) and/or step g) for growing the rhizomatous energy crop, the leachate collected in the cultivation bed is used for irrigation.

The present invention further relates to the use of digested sewage sludge, wherein the digested sewage sludge is used as a growing medium component for the cultivation of rhizomatous energy crops, and which use is characterized by that the growing medium contains diluent, and the rhizomatous energy crop is of the family *Poaceae,* preferably of the genus *Arundo,* more preferably *Arundo donax,* i.e. the giant reed.

### Detailed description of the invention

For the purposes of this description, an energy crop is a crop which is not intended for human or animal consumption and the corresponding parts of which are suitable after harvesting to be used as its material, as plant part (be it the use of wood material or wood chips in the construction or furniture industry), or for the use of the produced energy crop for energetic purposes, such as direct or indirect combustion of the energy crop for producing energy in an incinerator, combustion plant, power plant or conversion into other energy carriers, such as briquetting. The definition of energy crop also includes the conversion of the produced plant part into raw material by biological transformation, such as fermentation. For implementing the present invention any rhizomatous energy crop is suitable. By rhizomatous energy crops we mean energy crops with a rootstock, i.e. a rhizome. According to the present invention, the rhizomatous energy crop is preferably a rhizomatous energy crop belonging to the family *Poaceae,* more preferably a member of the genus *Arundo,* most preferably the *Arundo donax,* i.e. the giant reed.

The essence of the present invention is that in a cultivation bed isolated from the geological medium, a rhizomatous energy crop can be cultivated for long periods of time, even decades in cultivation cycles, where at least partially digested sewage sludge is used as a nutrient in the growing medium. This will allow, on the one hand, the cultivation of a rhizomatous energy crop and its utilisation as such and, on the other hand, this will allow the processing of biodegradable waste, which, with large-scale cultivation, will solve the current placement problem of the waste, i.e. the digested sewage sludge, used for this purpose. Current sewage sludge utilisation solutions are limited, and disposal solutions are not supported in the circular economy.

The present invention helps to produce energy crops without the use of natural resources (e.g. land, topsoil, irrigation water) and tillage, and with higher environmental yields than conventional field crop cultivation.

The present invention has advantages over prior art sewage sludge bioremediation. The system and process according to the present invention as compared to biodegradation recovery processes (other biological transformation and land disposal) does not produce compost from the sewage sludge, or can be used not only for recultivation of barren soil, or for the production of soil substitute, but its primary aim to produce a rhizomatous energy crop. In case of biological recovery of sewage sludge according to the state of the art, the resulting compost or fertiliser may be used only with additional restrictions or a permit. In many cases, limit value problems and restrictions make it difficult to use the compost produced in this way, and there is often no solvent demand.

The rhizomatous energy crop cultivation system according to the present invention comprises a cultivation bed. The cultivation bed is where the initial growing medium and later the top-ups are placed, and where planting and growing of rhizomatous energy crops, cultivation of the plantation and harvesting take place. Thus, in essence, the cultivation bed is the site of the cultivation of the rhizomatous energy crop and provides the habitat for the rhizomatous energy crop. The cultivation bed thus isolates this technological unit from its environment, so that the processes within it have essentially no harmful or risky effects on the environment. Since, unlike arable farming, it is an isolated system with its own growing medium, thus the operations in the cultivation bed are generally not subject to the soil protection and other standards that must be followed for outdoor cultivation (legal framework, limits, dosages, etc.) .

The primary effect of the cultivation bed is to prevent the geological medium from potential adverse effects and helps to collect rainfall. It is isolated from its environment in this way, but rain falls on it and the sun shines on it, it removes carbon dioxide from the air and produces oxygen, so the isolation is to be understood relatively in the context of the present invention.

The cultivation bed according to the invention can be created essentially anywhere. This is an advantage over fixed-site arable production, as it allows under-utilised areas that cannot be used for other purposes to be used as rhizomatous energy crop cultivation areas. Thus, the cultivation bed does not take land away from forest management or from cultivation for food production. However, given that water in the cultivation bed should not mix with ambient water (see details below), it is not advisable to build the cultivation bed in an area prone to flooding or inland water. In hillsides it is only advisable to design the cultivation bed so that the pedestal of the cultivation bed is nearly horizontal and nearly flat, e.g. by forming terraces. (As will be explained in more detail later, the term "nearly horizontal" includes the case where the pedestal of the cultivation bed is designed with a minimum slope to collect leachate.)

The use of a cultivation bed is also advantageous because, - unlike arable farming - there are no quantitative limits on the nitrogen supply, so the yield of the rhizomatous energy crop can be maximised with higher amounts of nitrogen nutrients.

The cultivation bed can be designed in several ways. The simplest is to create a circular dam around the area for the cultivation rhizomatous energy crops. The crown height and width of the circular dam should be determined taking into account the approximately 20 years of operation (see below for details). The determination of the stability the account of the expected rainfall shall be taken into account and that the retention of rainwater is one of the most important tasks of a cultivation bed. The other possible method is to sink it into the surface (excavate). In both cases, the bottom depth (in other words, the useful depth of the cultivation bed) depends on the rhizomatous energy crop to be cultivated and on the intended life cycle of the cultivation bed due to the replenishment per cultivation cycle (e.g. annually), for giant reeds it is at least 0.5 m, preferably about 1 m. Of course, it is possible to have a partially recessed cultivation bed, which is created using both excavation and the construction of a circular dam. Regardless of whether the cultivation bed is built on the original surface or in a recessed way, the circular dam built at the time of construction can be raised in later years as required. Furthermore, it is also possible, that a circular dam is not built around a recessed cultivation bed in the first years, but only later, when the increase in height of the growing medium from one cultivation cycle to the next requires it. The soil excavated when creating a partially recessed cultivation bed can be used to create the circular dam.

The construction of the circular dam must be carried out with due regard to the safe movement of manipulating and harvesting machinery in the cultivation area. For example, a circular dam built from excavated soil the degree of compactness (Trr %) is preferably between 60-90%, more preferably about 85%.

The circular dam of the cultivation bed according to the present invention is preferably constructed to be suitable to collect rainwater from sudden and variable intensity rainfall. This is achieved by a geometry such that precipitation falling on the surface of the circular dam flows towards the interior of the cultivation bed, for example, the circular dam has a sloping design towards the interior of the cultivation bed.

Depending on the fauna of the environment and the rhizomatous energy crop to be grown, it may be necessary to use a wildlife protection device around the cultivation bed or around several cultivation beds in close proximity to each other, in particular to ensure the protection of yearly fresh shoots. As wildlife protection device can be for example a fence with wild-nets, an electric fence, etc. When building a wildlife protection device, care must be taken to ensure that the vehicles and machinery needed to operate the rhizomatous energy crop cultivation system can enter to the cultivation bed(s).

A cultivation bed can also be created using abandoned structures such as roads, industrial storage areas (coal depots, other former storage foundations), abandoned waste treatment facility containers, etc. These usually have the necessary waterproofing features (see below) or can be converted to such with minimal investment. In some cases, a separate construction of a circular dam is not even necessary, since the circular dam function is already provided by the structure which is to be occupied according to the invention (e.g. the side wall of an abandoned beach pool).

The cultivation bed must be deep enough to accommodate the growing medium so that the growing rhizomatous energy crop can grow. The bottom depth of the cultivation bed is between about 0.3 m and 1.2 m, preferably about 1 m. A shallower than 0.3 m cultivation bed will not accumulate enough growing medium to allow rhizomatous energy crops such as giant reed to grow properly, so the yield of the rhizomatous energy crop would no longer be optimal in case such a shallow cultivation bed. On the other hand, a deeper cultivation bed than 1.2 m is uneconomic to operate, so there is no significant advantage in using a deeper bed like this, but it is certainly not excluded. For example, a deeper cultivation bed is an option if the cultivation bed is not intended to be emptied at the end of its life cycle, but rather to plant taller tree species. However, it should be borne in mind that in a deeper cultivation bed, the rhizomatous energy crop root system can also penetrate deeper, especially in nutrient and water deficit situations, but at greater depths compaction occurs and oxygen deficient zone is already established due to compaction, which is not beneficial to the growth of the rhizomatous energy crop. Our experience has shown that a 1 m deep cultivation bed is the optimum depth to achieve good yields over the life cycle of the rhizomatous energy crop cultivation system according to the present invention.

The pedestal of the cultivation bed, as mentioned above, should be nearly horizontal and flat. However, the pedestal of the cultivation bed preferably has a minimal slope (0.001% to 1.0%) relative to the horizontal in order to allow leachate to be collected at the bottom of the cultivation bed (see below for details) and drained. When designing the cultivation bed suitable for collecting the leachate the technical quality of the pedestal of the cultivation bed must also be taken into account. In the case of a less stable, less compact pedestal, it is preferable to have pedestal with a higher slope, whereas horizontal pedestal is also possible in the case of a stable, solid pedestal.

It is obvious for a person skilled in the art that several cultivation beds can be placed next to each other. Multiple cultivation beds should be designed to take into account the size ranges of the machinery and equipment to be used and, accordingly, to use spacers between the cultivation beds with a suitable load-bearing surface cover.

The cultivation bed is equipped with a watertight bottom, whose primary function is to effectively isolate the cultivation bed from the environment, more specifically to separate the water that is introduced into the cultivation bed by irrigation or rainfall capture, the growing medium and plants from waters outside the cultivation bed. This is necessary due to the situation, as will be discussed in detail below, that the rhizomatous energy crop cultivation system of the present invention uses growing medium materials (e.g. digested sewage sludge) that, when escaping from the cultivation bed or when the leachate originating from it is leaking from the cultivation bed may cause damage to the natural or built environment or may even be harmful to the health of animals or humans.

In addition to separating the contents of the cultivation bed from the environment, the function of the watertight bottom is to effectively retain water that enters the cultivation bed. Thus, the water absorbed from rainfall can be retained and, in the case of a crop tolerant to flooding, can be reserved for use during low rainfall periods. This means that essentially all of the available water is used to cultivate the rhizomatous energy crop to be grown. The exemplary giant reed presented as a rhizomatous energy crop of the present invention can tolerate periodic water cover following heavy rainfall, so there is no need to drain off what appears to be excess water, the cultivation bed according to the present invention retains it. In contrast, in the case of arable cultivation, the excess water runs off, i.e. is lost. On the other hand, the use of a watertight bottom prevents environmental pollution, contamination and thereby damage caused.

The design of the watertight bottom depends on the climatic conditions (temperature, rainfall, etc.) of the given area and the needs of the rhizomatous energy crop to be grown and is part of the general knowledge of the person skilled in the art. A watertight bottom according to the present invention may be formed from, for example: geomembrane, bentonite sheet, lake foil, agricultural foil, swelling medium made with bentonite powder in compacted state, barren (contaminated or polluted) soil, or a combination thereof. According to a preferred embodiment, the watertight bottom comprises bentonite closure. The watertight bottom may be naturally present in the cultivation bed according to the invention, for example, when the cultivation bed is formed in a clayey area. In such a case the watertight bottom is thus formed by natural clay. In a given case, if the natural clay has a suitable leakage coefficient (for example, a leakage coefficient of 10⁻⁹ m/s), a watertight bottom already present or made from such clay of at least 50 cm thickness, complies with the requirements of the present invention's expectations. Given that the system according to the invention can be built essentially anywhere, remaining elements from existing structures (e.g. abandoned buildings, factories, roads, beach ponds, industrial storage facilities, coal dump foundations) may also be suitable to be the cultivation bed or the watertight bottom of the cultivation bed, such as paving, concrete, asphalt. In such cases, care must of course be taken to detect and repair any damage or defects so that the waterproofing function is not impaired.

It is obvious for a person skilled in the art that the area of the watertight bottom must be adapted to the size of the cultivation bed in order to fulfil the waterproofing function. The thickness of the watertight bottom and therefore its load-bearing capacity, as it is obvious for a person skilled in the art, depends on the material chosen, the needs of the rhizomatous energy crop to be cultivated (e.g. growing medium thickness), the size of the rhizomatous energy crop and on the machinery to be used during cultivation.

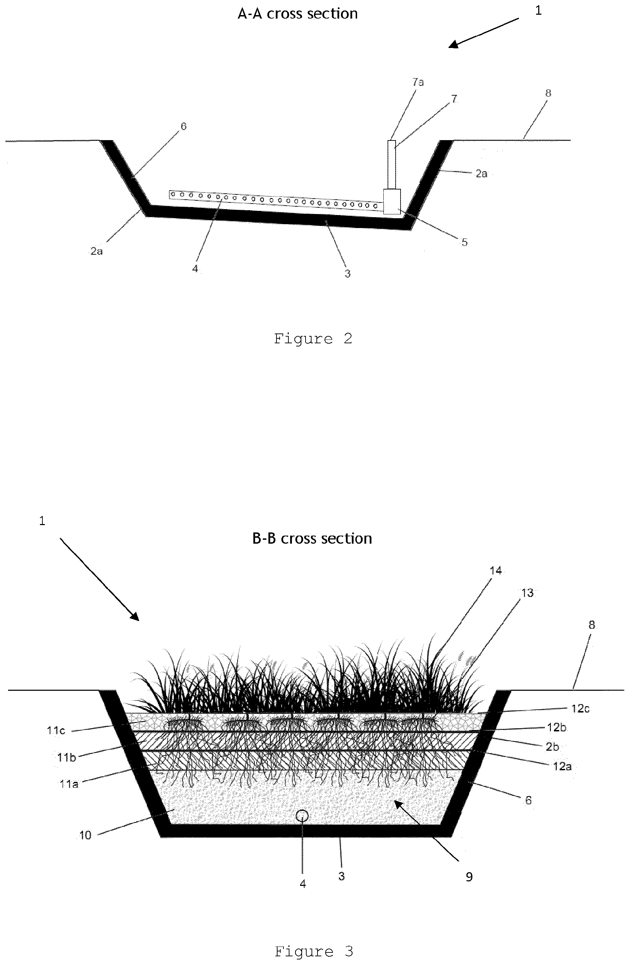

As it is obvious for a person skilled in the art, the watertight bottom can be formed not only on the pedestal of the cultivation bed, but also on the side wall of the cultivation bed, as shown in Figures 2 and 3. For proper water sealing, it is advisable to provide a watertight bottom on the side wall of the cultivation bed at least as high as the highest expected nutrient substitute layer loading level can reach at any time.

The cultivation bed according to the present invention is preferably designed to be suitable for draining leachate. The solution for leachate drainage, which is known as such, will be built when the cultivation bed is constructed. The leachate drainage of the cultivation bed may be made possible with a groove formed on the pedestal of the cultivation bed, optionally filled-up with gravel, preferably with a perforated drainage pipe laid onto the pedestal of the cultivation bed, preferably in groove, etc.

The cultivation bed according to the present invention preferably comprises an irrigation system, known as such. The irrigation system preferably will be built when the cultivation bed is constructed.

According to a preferred embodiment of the present invention, the collection and drainage of the leachate and irrigation system is configured as a unit such that the leachate can be used for irrigation. For this purpose (i.e. the collection and drainage) for example, perforated drainage pipes are used. The perforated drainage pipes are laid at the pedestal of the cultivation bed, at the lowest point of the cultivation bed, and are led into a collection well suitable for collecting leachate.

The collection well contains a surface outlet. Excess rainwater seeps through the cultivation bed, leaching, as a leachate, through perforations in the drainage pipes laid at the pedestal of the cultivation bed into the drainage pipes and therefrom into the collection well. From here, the leachate can be pumped out if necessary (e.g. in drier weather) and used to irrigate the cultivation bed. This solution also allows the chemical and biological composition of the leachate to be controlled by sampling from the collection well at given intervals. Re-use of leachate for irrigation makes the process more economical due to the reuse of water, but also allows for a more balanced water management, which ultimately contributes to maximising the yield of the cultivation bed. It is obvious for a person skilled in the art that in such a system, all the water in the cultivation bed is partly in the growing medium and partly in the collection well, which water masses are in equilibrium. If water is pumped out of the collection well, e.g. for irrigation, then another dose of water will flow through the perforated drainage pipe from the growing medium into the collection well.

The cultivation bed described above is filled with growing medium.

The growing medium is the habitat of the rhizomatous energy crop to be cultivated, physically the place of planting. It is essentially a three-phase dispersed system that supplies water, nutrients and air to the rhizomatous energy crop. The growing medium has the same function as natural soils, but the growing medium is a substitute for soil.

In view of the fact that materials considered as waste for the production of the growing medium according to the present invention are also used (e.g. digested sewage sludge), so the use of growing medium also has a waste recovery function. The growing medium can be used at the end of the about 20-year life cycle of the rhizomatous energy crop cultivation system according to the invention for example as a soil conditioner, so essentially a material cycle can be achieved by means of the present invention, contributing to sustainable development.

The growing medium according to the present invention can contain even 50% organic material, compared to 0-5% organic material in natural soils. The function of organic material is twofold. On the one hand, they provide nutrients for the rhizomatous energy crop being cultivated, and they can retain nutrients, mainly NPK materials, and provide an extended spectrum regarding microelements. Substances that are slow to decompose or resistant to biodegradation for a long time are transformed by natural processes in the soil into humus-like substances, and some of them are then transformed into humates and humus. The humus that formed is capable of being used to bind plant nutrients on its large active surface, slowing their washing out. Moreover, the humus provides a surface for biological life in the soil. Therefore, its presence and the highest possible quantity is desirable also in the system according to the present invention. Degradation is accelerated when each form of these is present in the highest possible concentration. In essence, they improve nutrient management, air- and water management. In this respect, this system simulates degradation in soil. If large masses of organic material can be provided in several stages of decomposition in the growing medium, the highest possible proportion of soil life can be created. This diverse microbial matrix will also contain microorganisms that can utilize the pollutants in the digested sewage sludge as a source of nutrients. Therefore, organic pollutants from digested sewage sludge will also decompose more quickly in such a growing medium. The organic material in the growing medium is involved in the root retention and expansion of the rhizomatous energy crop and by replicating the decomposition processes in the soil, the organic material stock of the growing medium decomposes in a prolonged way, providing a surface and habitat for decomposing organisms, so that organic material and organic wastes for nutrient replenishment, for example the breakdown of organic pollutants and organic micropollutants in digested sewage sludge (e.g. POP compounds) are carried out by them.

Another function of the growing medium in addition to the life maintenance and intensification of the rhizomatous energy crop, to make the remaining root mass of the energy crop after harvesting, or the dead root mass from earlier times, and the decomposed, decaying mass of material available for use at the end of the life cycle of the growing medium, for example as soil improver, soil conditioner and soil substitute.

A further function of the growing medium is to make space for the biodegradation of the added waste materials (e.g. digested sewage sludge), as these waste materials provide the necessary nutrient supply for the rhizomatous energy crop being cultivated. The root mass carried, together with the spontaneous native decomposing microorganisms carried, enables the growing medium for rapid and efficient decomposition of waste materials (e.g. digested sewage sludge) and for conditioning of the added waste mass.

To form the growing medium, first an initial growing medium is formed, and then nutrient replenishment and a barrier layer are applied every cultivation cycle (e.g. annually).

The initial growing medium (also known as starter growing medium) is digested sewage sludge resulting from the anaerobic biological treatment of sewage sludge from municipal and industrial wastewater treatment and a mixture of diluent in a specified proportion. The mixing ratio of the two components (i.e. digested sewage sludge and diluent) may be between 20% and 80%, preferably about 50-50%. (For the purposes of the present specification, unless otherwise stated, % or percentage is taken to mean the percentage by volume.)

In the growing medium, the function of the digested sewage sludge is to provide nutrients for the rhizomatous energy crop to be cultivated. Ideally, during the decomposition of the sewage sludge into complete humus and humus-like substances, at the end of the decomposition process, it loses 90% of its original mass, and in some cases, it can decompose completely, leaving only the ash content of the original mass.

In the growing medium, the function of the diluent is the dilution of the sewage sludge, thereby relatively reducing the high nitrogen content by shifting the carbon : nitrogen ratio in a favourable direction. By relative reduction here we mean that the dilution does not actually reduce the nitrogen content of the digested sewage sludge, but that by adding the diluent to the digested sewage sludge, the resulting growing medium will have a lower nitrogen concentration. Consequently, substances with a nitrogen content lower than that of digested sewage sludge may be used as diluents according to the present invention, so the relative nitrogen content of the resulting growing medium decreases with the addition of the diluent. This is important to avoid damage to the rhizomatous energy crop seedling due to high nitrogen content. In addition to the low nitrogen content, substances that are preferred as diluents are those which provide some looseness, texture or surface and can be homogeneously mixed with the digested sewage sludge.

The biodegradable fraction (hereinafter referred to as compost) of the residue from mechanical and biological treatment of municipal solid waste (municipal solid waste MBWT, where MBWT stands for mechanical-biological waste treatment) is preferably used as a diluent. Other than the compost, other waste, agricultural or food industry by-products with a high organic matter content similar to the compost and suitable for the relative reduction of nitrogen in digested sewage sludge, can be used as diluent.

A diluent may also be a compost-like material produced by adding a mixture of mineral and/or inorganic wastes (e.g. inert soil, power plant fly ash, inorganic fraction of crushed and sorted demolition waste below 20 mm particle size, etc.) as an additive to separately collected municipal and other green waste, or to other agricultural by-products.

From the above, it is clear for a person skilled in the art that many different diluents can be envisaged within the framework of the present invention. It is likely that a material suitable as a diluent as described above can be found in the vicinity of a rhizomatous energy crop cultivation system, so that the diluent does not have to be transported from a distance, which reduces the ecological footprint of the system to be built.

In the composition of the initial growing medium the needs of the normally undemanding rhizomatous energy crop and, after the exhaustion of the cultivation bed, the usability of the residual growing medium (e.g. as a soil conditioner) should be taken into account. It is therefore advisable that the initial growing medium does not contain risky and/or foreign materials such as plastics, rubber, tissue etc. to a degree that would be dangerous. It is advisable that the proportion of such materials, in particular those below 20 mm grain size are kept below 1% in the initial growing medium. Risky and/or foreign material larger than 20 mm grain size is of course also unfavourable, however such contaminants can be easily separated by mechanical sieving when the initial growing medium is formed.

Too high a nitrogen content in the initial growing medium will adversely affect subsequent yields. Therefore, it is preferable that the content of nitrogen-containing compounds in the initial growing medium that can be utilized as a nitrogen source does not exceed 5 kg/ha per 10 cm layer thickness viewed as surface projection (in other words, for example, for a layer thickness of 20 cm, the desirable limit is 10 kg/ha).

The rhizomatous energy crop is cultivated in the first cultivation cycle (e.g. in the first year) using the initial growing medium described above. It is noted that in the context of the present invention, a cultivation cycle essentially covers one year within the typical Central European climatic conditions. However, the present invention may also be applied in areas where climatic conditions allow more than one cultivation cycle per year, and therefore the present invention is not limited to annual cultivation cycles.

At the end of the cultivation cycle, the rhizomatous energy crop is harvested in a way that is known per se. After harvesting, digested sewage sludge is placed onto the surface of the cultivation bed to form a nutrient substitute layer. This replaces the nutrients utilized in the previous cultivation cycle. The amount of digested sewage sludge to be applied in this way is determined by the needs of the cultivated rhizomatous energy crop and the climatic conditions. For example, in the case of a cultivation bed for giant reed cultivation in Central Europe, it is appropriate to apply a layer of digested sewage sludge at a thickness of about 10 cm as a nutrient substitute layer. In case digested sewage sludge with a lower nitrogen content (e.g. sludge from biogas production) is used, a thicker nutrient substitute layer may be applied. However, it is not advisable to use a nutrient substitute layer thicker than 20 cm, as this would have a negative effect on the aeration of the lower layers. If the applied digested sewage sludge is prone to compaction, the thickness of the nutrient substitute layer should be adjusted accordingly to ensure adequate aeration. The nutrient substitute layer may not necessarily be made exclusively of digested sewage sludge but may be a mixture of digested sewage sludge and other suitable material (e.g. compost) mentioned above, however, it is preferable if the nutrient substitute layer is essentially made of digested sewage sludge.

One of our findings underlying the present invention is that digested sewage sludge can be placed on the surface of the cultivation bed as a nutrient substitute layer in case of rhizomatous energy crops. This could not be done in any other way in the case of rhizomatous energy crops, as the root tissue prevents deep cultivation, injection or agrotechnical operations using rotation techniques. The use of nutrient substitute layer placed onto the surface, as it is obvious for a person skilled in the art, works not only for the giant reed studied in detail in the development of the present invention, but also for other rhizomatous energy crops. Furthermore, by applying newer and newer nutrient substitute layers onto the surface of the cultivation bed from one cultivation cycle to the next cultivation cycle (e.g. year after year), in the case of energy crops with rhizomes (e.g. giant reed) the rhizomes move upwards, and during one cultivation cycle the nutrient substitute layer on the surface is woven in. This ensures that the rhizomatous energy crop root system always has access to sufficient oxygen from the soil-air, so the maximum growth intensity is ensured. On the other hand, the NPK materials released during the decomposition of organic material in the digested sewage sludge migrate down in the nutrient substitute layer through earlier decomposed sludgebodies in different stages and through earlier root levels, almost completely trapped. The cultivated rhizomatous energy crop is capable of utilizing the total amount in changing annual or seasonal circumstances, even in annual or seasonal extremes, such as drought or excessive rainfall. Different stages of layering and decomposition can buffer the adverse effects of a given cultivation cycle.

Close to the surface, the nutrient substitute layer undergoes extreme weather, high temperature, humidity and aeration changes, during which the root system slowly weaves it through. Here, synergistic nitrogen-fixing organisms appear, which belong to the microorganisms of the root system of the rhizomatous energy crop. Winter frosts near the surface are likely to freeze the nutrient substitute layer. Thus, the high bound water content due to flocculants and sediment agents present in the digested sewage sludge - in case of frost - is removed by frost degradation of these materials by 80-90% in the first winter, after frost. Due to water loss, the nutrient substitute layer in the cultivation bed grows to a thickness of only about 1 m in 10-20 years. This makes it much easier for aerobic microorganisms to break down organic materials and organic pollutants.

The use of digested sewage sludge as a nutrient substitute layer will result in the formation of a biological film due to the application of a barrier layer (see below for details). (We note here, that in the first year, the function of the barrier layer mentioned here is performed by the diluent in the initial growing medium.) Such a biological film cannot form when sewage sludge is disposed of at depth. The biological film that forms in the nutrient substitute layer facilitates the development of agents which bind the organic and inorganic pollutants present in the digested sewage sludge, degrade organic pollutants (here it is about mainly about substances that are more difficult to degrade such as TPH (Total Petroleum hydrocarbons, total aliphatic and alicyclic petroleum hydrocarbons), PAHs (polycyclic aromatic hydrocarbons), BTEX (benzene and alkylbenzenes) and POPs (persistent compounds that are difficult to biodegrade)). The continuous increase in height from cultivation cycle to cultivation cycle results in deeper and deeper burial of a given nutrient substitute layer from cultivation cycle to cultivation cycle, while the root zone continuously maintains its biological activity. This slow but continuous change over several cultivation cycles results in a change in decomposition conditions and all the necessary factors (e.g. moisture content, aerobic conditions, specific surface area, presence of the right number of decomposing and binding organisms) can also play a role in the following stages. The international terminology refers to the stages of humification as mor, moder and mull. In the structure of mor the dead organic material and the soil underneath is clearly separated. In the case of moder, the decomposition of dead organic material and its transformation into structural material is advanced, the boundary between dead organic matter and soil is beginning to disappear, but plant remains are still recognisable. In the mull, humification is advanced and plant structures are no longer recognisable. Thus, only a small amount of organic contaminants remains at the end of the system's lifetime.

The applied nutrient substitute layers are thinning by each cultivation cycle. For example, a nutrient substitute layer of digested sewage sludge with an initial thickness of about 10 cm will shrink to about 2 cm over a 20-year lifetime. This is largely due to loss of water content and to a lesser extent to the decomposition of organic material. This also has the consequence that some components that are not degraded or are degraded with lower intensity and are not incorporated into the rhizomatous energy crop, e.g. phosphorus, are enriched in the nutrient substitute layer.

At the end of a given cultivation cycle, the nutrient substitute layer applied as described above is preferably sealed off from the immediate environment with a barrier layer. The purpose of the application of the barrier layer is to decrease the unpleasant odour, unpleasant visual impact and the possibility of the escape of any infectious agents due to the presence of the nutrient substitute layer containing the digested sewage sludge. The barrier layer will also help to prevent the leaving of water content due to evaporation, and to help creating the biological film mentioned above. The barrier layer is made up of plant residues, such as hay or mulch.

Preferably, a mulch known per se is used as the barrier layer. The mulch material can be any plant-based chips that perform the above function and do not hinder the growth of rhizomatous energy crops in the next cultivation cycle. The use of mulch as a barrier layer is advantageous because to its surface cellulose-, lignin- and hemicellulose-degrading microorganisms can stick, for which the mulch surface provides an ideal and intensified habitat. The resulting biologically active surface helps to break down the hard-to-degrade organic macromolecules in the digested sewage sludge. By using mulch in the nutrient substitute layer, the ideal carbon : nitrogen ratio can be set early on.

As mulch, chips preferably made from the cultivated rhizomatous energy crop, for example from the giant reed, is used, which are available on the spot and do not have to be transported from far away. The chopping of rhizomatous energy crops can be done even on site immediately after harvesting. If the mulch is made from the rhizomatous energy crop, about 2-20%, preferably 10%, of the harvested rhizomatous energy crop can be returned to the surface of the nutrient substitute layer as a barrier layer.

The mulch as a barrier layer to the nutrient substitute layer can be applied for example with flapper machines. According to the present invention, it is particularly preferred to carry out the harvesting, the spreading of the nutrient substitute layer and the mulching to form the barrier layer in strips. This can be done by using a harvester with a mulching adapter, and this machine on the one hand harvests the cultivated rhizomatous energy crop, shreds a part of it and distributes the mulch prepared in this way on the adjacent surface, which has already been covered earlier with the nutrient substitute layer.

If a biodegradable barrier layer of plant residue (e.g. mulch) is used, this will usually thin over time, forming a sandwich structure over several cultivation cycles. This sandwich structure has a favourable effect on degradation/stabilisation processes facilitated by the barrier layer made of plant residues described above. The sandwich structure breaks down in space the surface-intensive degradation process into units with smaller thickness, in which the total process is thus more efficient, more intensive (e.g. a biofilm with a much larger surface can be formed, as there will be such a layer above and below).

The most important constituents of soil are the colloidal sized water-surrounded clay minerals and humic material. In a calcium-rich environment, these form clay mineral - humus complexes, which form the soil crumbs. Humus is a group of resistant, poorly decomposable compounds that are soluble in water only under certain conditions. Accumulation in large quantities rarely happens. Its degradation is a slow process, with simple compounds as the end products. It is this slow decomposition that allows humus to provide nutrients, especially nitrogen, to plants over a long period of time. The uptake of nutrients is essentially the result of the solid components of the soil, the soil solution, the interaction between microorganisms in the soil and the root surface of plants.

Repeated application of digested sewage sludge as a nutrient substitute layer and of plant residues (e.g. mulch) as a barrier layer, intensive decomposition of all of these, followed by the partial decomposition products as new layers, are repeatedly pass through these stages. These stages of organic material are thus assuredly carried through, and the repetitions reinforcing each other.

After the barrier layer is applied, the rhizomatous energy crops will start growing again the following spring, and the nutrient substitute layer applied as described above will provide them with sufficient nutrients to grow for the next cultivation cycle and the cultivation cycle described in detail above can be repeated. It is estimated that around 20 such cultivation cycles can be expected following a single planting, for example in case of the giant reed.

The rhizomatous energy crop cultivation method carried out in a cultivation bed according to the present invention is also advantageous because, in the case of energy crops with rhizomes (such as in the preferred embodiment of the present invention, the giant reed) in field cultivation, the rhizome prevents the nutrient supply from being incorporated by rotation into the soil. However, arable energy crop cultivation would require the incorporation by rotation of nutrient replenishment in the form of, for example, digested sewage sludge so that precipitation does not wash it into other areas, e.g. into arable land for food crops. Therefore, digested sewage sludge should not be used as a source of nutrients for the cultivation of arable energy crops with rhizomes.

According to the present invention, the nutrient (essentially the digested sewage sludge) is placed above the rhizome, which nutrient is still highly utilizable, but does not endanger other cultivation areas thanks to the use of a cultivation bed. Nutrients dissolved from the initial growing medium and the nutrient substitute layer migrate through the root system. In addition, each year a new rhizome layer is formed due to the application of a new nutrient substitute layer each year, so the root zone will always be aerated and nutrient-rich.

The digested sewage sludge which can be used in the context of the present invention is primarily digested sewage sludge from municipal wastewater. Of course, the use of digested sewage sludge from other wastewaters is also conceivable within the scope of the present invention, provided that such digested sewage sludge contains nutrients useful for the given energy crop and does not contain contaminants that may be dangerously harmful for the rhizomatous energy crop or for the personnel involved in the cultivation.

The advantage of the system according to the present invention is that the used large quantities of digested sewage sludge only need to be moved (lifted) twice during its entire 20-year lifetime, first when it is loaded and then, after it has been reduced to a fraction of its original weight, when it is extracted.

The rhizomatous energy crop cultivation system according to the present invention can be effectively operated for about 20 years when cultivating giant reed, by which time this energy crop will be old and at the end of its biological life. Therefore, a life cycle of about 20 years after planting can be expected. It is obvious for a person skilled in the art that this lifetime depends on several factors, such as climatic conditions, the characteristics of the given rhizomatous energy crop, the quality of the digested sewage sludge used, etc. After this period, the accumulated composted digested sewage sludge can be put to good use.

This is because the rhizome and surface parts of the giant reed bind and store toxic metals and heavy metals that may be present in the digested sewage sludge, but by the harvesting of the plants most of such metal contamination can be removed. At the end of the life cycle of the cultivation bed, the rhizomes can be removed by sieving, so that the heavy metals accumulated in them can be removed from the growing medium. The remaining composted digested sewage sludge can therefore be used in agriculture for soil improvement in the following of the removal of the cultivation bed. Over a lifetime of about 20 years, most of the contaminants (POP materials and other organic pollutants) will degrade, so there is little or no need for further treatment of these. By the end of the life cycle of the cultivation bed the applied digested sewage sludge is essentially composted, and the growing medium can then be essentially utilized as compost.

A depleted cultivation bed can also be utilized by leaving the composted digested sewage sludge in it and as a final form, planting e.g. tree plants in it, as a layer of soil about 1 m thick is essentially available.

The use of a rhizomatous energy crop, such as giant reed, grown by the process according to the present invention is extensive. Its primary use is, as the name implies, as an energy crop, i.e. it can be used in a biomass power plant to produce energy, e.g. electric energy. In this context, it is important to note that the use of energy crops in power plants is advantageous compared to power plants using fossil fuels, as such carbon dioxide is released into the air during combustion that was previously removed from the atmosphere by the energy crop. In addition, these plants are good construction (e.g. controlled fibreboard i.e. OSB, furniture board) or handicraft (e.g. baskets) raw materials.

### Examples

The present invention is illustrated below by way of examples, which should in no way be considered as a limitation of the claimed protection.

### Example 1: Cultivation bed

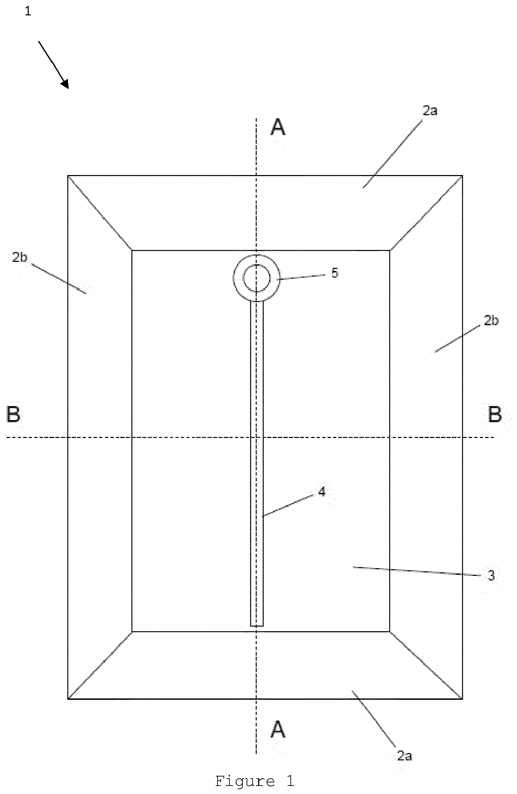

Figure 1 shows a preferred embodiment of a cultivation bed for a rhizomatous energy crop cultivation system according to the invention shown in the absence of growing medium and rhizomatous energy crop, schematically shown in top view. (The sections along the auxiliary lines A-A and B-B are shown in further figures and explained in connection thereof.)

Cultivation bed 1 in Figure 1 is rectangular with two shorter sides 2a and two longer sides 2b, and a pedestal 3. The shorter sides 2a and the longer sides 2b enclose an obtuse angle with the pedestal 3. The pedestal 3 has a watertight bottom (not shown separately). On the pedestal 3 a perforated drainage pipe 4 is laid longitudinally in the middle, which ends in the collection well 5.

The cultivation bed 1, suitable for the cultivation of the giant reed as a rhizomatous energy crop, has an average depth of about 1 m, the watertight bottom of the cultivation bed 1 according to the example is consisting of geomembrane.

A cross-sectional view of the cultivation bed 1 shown in Figure 1 in top view, indicated by the A-A auxiliary line, is shown in Figure 2. The shorter sides 2a and pedestal 3 are covered with a watertight bottom 6. As shown in Figure 2, the perforated drainage pipe 4 is sloped towards the collection well 5. Note that the slope angle in Figure 2 is exaggerated for illustrative purposes but is in reality less slope (1% or less) is sufficient. A pipeline 7 is discharged from the collection well 5, which serves as the surface outlet for the collection well 5. A pump (not shown) can be connected to the outlet 7a of this pipeline 7 to pump the leachate accumulated in the collection well 5. The cultivation bed 1 according to the example has a recessed design, as it is located below the ground level 8.

A cross-sectional view of the cultivation bed 1 shown in Figure 1 in top view, indicated by the B-B auxiliary line, is shown in Figure 3. Here it can be seen that the longer sides 2b are also covered with watertight bottoms 6. The perforated drainage pipe 4 is shown there in cross-sectional representation.

The cultivation bed according to Figure 3 is filled with growing medium 9. We note here that by growing medium 9 we mean all the layers shown here. The layering arrangement of the growing medium 9 in Figure 3 is from bottom to top as follows: initial growing medium 10, first nutrient substitute layer 11a, first barrier layer 12a, second nutrient substitute layer 11b, second barrier layer 12b, third nutrient substitute layer 11c, and third barrier layer 12c. Below the third barrier layer 12c are the rhizomes 13 of the cultivated rhizomatous energy crop 14 and above the third barrier layer 12c the above-ground harvestable parts of the cultivated rhizomatous energy crop 14.

The cultivation bed 1 according to Figure 3 is in its fourth cultivation cycle. In the first cultivation cycle the cultivation bed 1 was filled with the initial growing medium 10, and after the rhizomatous energy crop growth period, the first nutrient substitute layer 11a and the first barrier layer 12a were placed on the surface after harvesting. In the following second cultivation cycle, the rhizomatous energy crops were again grown, harvesting was done and then the second nutrient substitute layer 11b and the second barrier layer 12b were placed on the surface. In the following third cultivation cycle, the rhizomatous energy crops were again grown, harvesting was done and then the third nutrient substitute layer 11c and third barrier layer 12c were placed on the surface. The following fourth cultivation cycle stage is shown in Figure 3, during which the energy crops 14 are already grown.

The cultivation bed 1 according to the example can be designed as follows:
- as pedestal 3 mirroring was carried out without compaction at a depth of 30 cm;
- 20 m³ of bentonite powder (2%) sprayed with a fertiliser spreader to create a watertight bottom 6 sufficient in the top 10 cm;
- application of bentonite powder with a tiller to a depth of 15-20 cm, mechanical compaction over a large surface area with a slope of about 1%, degree of compaction: 85%;
- establishing a circular dam (not shown) from the material excavated during the construction of the mirror (base: 3 m wide, crown: 1 m wide and 1 m high, made out of 2 m³/m material);
- at the bottom of the cultivation bed laying a D50 perforated drainage pipe 4 in the watertight bottom 6 with ditching (to remove excess water and for patterning), with geomembrane protective cover.

To create the initial growing medium 10 in the cultivation bed 1 thus constructed, from digested sewage sludge from a municipal wastewater treatment plant and from biological residues passed through a TSZH filter as a diluent (compost) a mixture is formed and this is spread in the cultivation bed 1 to a thickness of 30 cm, then homogenise the top 15 cm of the layer with a soil tiller. In the initial growing medium 10 thus obtained, giant reeds are planted as the rhizomatous energy crop 14.

### Example 2: Cultivating giant reed

Giant reed is cultivated as the rhizomatous energy crop in the cultivation bed of Example 1.

In the first cultivation cycle 30 cm thick initial growing medium 10 is used. This initial growing medium is a mixture of digested sewage sludge and compost in a volume ratio of approximately 1:1. Thus, to create 30 cm of initial growing medium, approximately 15-15 cm of both the digested sewage sludge and the compost used as the diluent are applied, which is about 1500-1500 m³/ha of the two components. Into this, the planting of the giant reed as the rhizomatous energy crop is carried out, preferably with a planting device, in spring in Central Europe.

The rhizomatous energy crop is harvested continuously during the late autumn - winter months (typically from November to February in Hungary). The optimum period for harvesting is the end of winter, when water content is at its lowest. Harvesting should be started at the beginning of winter dormant period of the rhizomatous energy crop, when the leaves are dying and withering. In the first cultivation cycle, after harvesting, a layer of digested sewage sludge from municipal sewage is placed onto the stubble about 10 cm thick as a nutrient substitute layer 11a. This nutrient substitute layer 11a is then covered with a mulch made from the harvested giant reed as the first barrier layer 12a. The mulch applied is approximately 10% of the harvested plant material. In the next cultivation cycle (i.e. the following spring in the example), the newly growing giant reed will grow through this first a nutrient substitute layer 11a (digested sewage sludge layer) and the first barrier layer 12a mulch layer and, among others, thanks to that the giant reed rhizomatous energy crop, will again produce a good yield.

These cultivation cycles are repeated for 20 years. After the twentieth cycle, the growing medium 9 is harvested and used for soil improvement in arable land.

The advantages of the rhizomatous energy crop cultivation system according to the present invention are that it can be established substantially anywhere, any odour emissions are minimal because of the aerobic processes, in the digested sewage sludge used the majority of the pollutants are degraded and absorbed by the cultivated crops, so the composted digested sewage sludge can be used for agricultural purposes later, there is essentially no need for crop protection, and the maintenance and operation of the system does not require any particular expertise.

## Claims

1. A rhizomatous energy crop cultivation system comprising a cultivation bed (1), a growing medium (9) and
rhizomatous energy crop individuals (14) therein, **characterized in that** the growing medium (9) comprises digested sewage sludge and diluent, and the cultivation bed (1) has a watertight bottom (6).

2. The rhizomatous energy crop cultivation system according to claim 1, **characterized in that** the growing medium (9) has a layering arrangement from the bottom upwards as follows:
initial growing medium (10), first nutrient substitute layer (11a) and first barrier layer (12a), wherein the first nutrient substitute layer (11a) is digested sewage sludge, and the first barrier layer (12a) is plant residue.

3. The rhizomatous energy crop cultivation system according to claim 2, **characterized in that** the growing medium (9) comprises a plurality of nutrient substitute layers (11a, 11b, 11c) and a plurality of barrier layers (12a, 12b, 12c) in an alternating arrangement over the initial growing medium (10), wherein each nutrient substitute layer (11a, 11b, 11c) is digested sewage sludge and each barrier layer (12a, 12b, 12c) is plant residue.

4. The rhizomatous energy crop cultivation system according to any of claims 2 to 3, **characterized in that** the diluent is compost.

5. The rhizomatous energy crop cultivation system according to any of claims 2 to 4, **characterized in that** the ratio of digested sewage sludge to diluent in the initial growing medium (10) ranges from 20% sewage sludge : 80% diluent to 80% sewage sludge : 20% diluent, preferably 50% sludge : 50% diluent.

6. The rhizomatous energy crop cultivation system according to any of the claims 2 to 5, **characterized in that** the plant residue forming the one or more barrier layers (12a, 12b, 12c) is mulch, preferably mulch prepared from said rhizomatous energy crop (14).

7. The rhizomatous energy crop cultivation system according to any of the claims 1 to 6, **characterized in that** the cultivation bed (1) is provided with a pedestal (3) suitable for draining leachate and a collection well (5) suitable for collecting the leachate, and the cultivation bed (1) contains an irrigation system by the use of which the leachate collected in the collection well (5) can be used to irrigate the cultivation bed (1).

8. The rhizomatous energy crop cultivation system according to claim 7, **characterized in that** the pedestal (3) suitable for draining leachate comprises a perforated drainage pipe (4) leading to a collection well (5), wherein the pedestal (3) has a slope along the perforated drainage pipe (4) in the direction to the collection well (5) relative to the horizontal, preferably a slope of up to 1.0%.

9. The rhizomatous energy crop cultivation system according to any of claims 1 to 8, **characterized in that** the cultivation bed (1) is configured as a partially recessed or recessed cultivation bed, and/or comprises a peripheral barrier, and/or a wildlife protection device is installed around it.

10. The rhizomatous energy crop cultivation system according to any of claims 1 to 9, **characterized in that** the rhizomatous energy crop is of the family *Poaceae,* preferably of the genus *Arundo,* more preferably the *Arundo donax,* i.e. the giant reed.

11. Growing medium (9) for cultivation a rhizomatous energy crop, said growing medium (9) comprising digested sewage sludge, **characterized in that** it comprises a plurality of layers from the bottom upwards as follows: an initial growing medium (10), a first nutrient substitute layer (11a) and a first barrier layer (12a), wherein the initial growing medium (10) comprises digested sewage sludge and diluent, the first nutrient substitute layer (11a) is digested sewage sludge and the first barrier layer (12a) is plant residue.

12. The growing medium (9) according to claim 11, **characterized in that** the growing medium (9) comprises over the initial growing medium (10) in alternating arrangement a plurality of nutrient substitute layers (11a, 11b, 11c) and a plurality of barrier layers (12a, 12b, 12c), wherein each nutrient substitute layer (11a, 11b, 11c) is digested sewage sludge and each barrier layer (12a, 12b, 12c) is plant residue, and optionally the diluent is compost.

13. The growing medium (9) according to claim 11 or 12, **characterised in that** the plant residue forming the one or more barrier layers (12a, 12b, 12c) is mulch, preferably a mulch prepared from said rhizomatous energy crop (14).

14. The growing medium according to any of claims 11 to 13, **characterised in that** the ratio of digested sewage sludge to diluent in the initial growing medium (10) ranges from 20% sewage sludge : 80% diluent to 80% sewage sludge : 20% diluent, preferably 50% sewage sludge : 50% diluent.

15. The growing medium according to any of the claims 11 to 14, **characterized in that** the rhizomatous energy crop is of the family *Poaceae,* preferably of the genus *Arundo,* more preferably *Arundo donax,* i.e. the giant reed.

16. Harvested rhizomatous energy crop, **characterized in that** it was grown in a rhizomatous energy crop cultivation system according to any of claims 1 to 10 or it was grown in a growing medium (9) according to any of claims 11 to 15.

17. The harvested rhizomatous energy crop according to claim 16, **characterized in that** the rhizomatous energy crop is of the family *Poaceae,* preferably of the genus *Arundo,* more preferably *Arundo donax,* i.e. the giant reed.

18. A method for the cultivation of a rhizomatous energy crop, which is carried out in a cultivation bed (9) with a watertight bottom (6) and containing a growing medium (9), which method is **characterised by** the following steps:
a) initial growing medium (10) is placed in the cultivation bed (9), which initial growing medium (10) contains digested sewage sludge and diluent;
b) said rhizomatous energy crop (14) is planted in the initial growing medium obtained in step a);
c) the rhizomatous energy crop (14) is grown;
d) the rhizomatous energy crop (14) grown in step c) is harvested.

19. The method for cultivating a rhizomatous energy crop according to claim 18, **characterized in that** it further comprises the steps of:
e) a first nutrient substitute layer (11a) is placed onto the stubble remaining after step d), which nutrient substitute layer (11a) contains digested sewage sludge;
f) on the first nutrient substitute layer (11a) a first barrier layer (12a) is placed, which barrier layer is preferably mulch, more preferably a mulch made from said rhizomatous energy crop (14);
g) the rhizomatous energy crop (14) is grown within the next cultivation cycle;
h) a rhizomatous energy crop (14) grown according to step g) is harvested.

20. A method for cultivating a rhizomatous energy crop according to claim 19, **characterized in that** further cultivation cycles are carried out, wherein after step h) steps according to steps e) to h) are carried out such that in an alternating arrangement additional nutrient substitute layers (11b, 11c) and additional barrier layers (12b, 12c) are placed on top of the corresponding layer.

21. A method for cultivating a rhizomatous energy crop according to any of claims 18 to 20, **characterized in that** the rhizomatous energy crop is of the family *Poaceae,* preferably of the genus *Arundo,* more preferably *Arundo donax,* i.e. the giant reed.

22. A method for cultivating a rhizomatous energy crop according to any of claims 18 to 21, **characterized in that** during step c) and/or g) for growing the rhizomatous energy crop (14), the leachate collected in the cultivation bed (9) is used for irrigation.

23. The use of digested sewage sludge as a component of a growing medium (9) for the cultivation of rhizomatous energy crops, **characterised in that** the rhizomatous energy crop is of the family *Poaceae,* preferably of the genus *Arundo,* more preferably *Arundo donax,* i.e. the giant reed, and wherein the growing medium contains diluent.
